# EUROPÄISCHE PATENTSCHRIFT

(11) **EP 3 835 603 B1**
(45) Veröffentlichungstag und Bekanntmachung des Hinweises auf die Patenterteilung: **20.03.2024**
(21) Anmeldenummer: 20208568.4
(22) Anmeldetag: 19.11.2020
(51) Int. Cl.: F16B 13/12

(54) **DÜBEL MIT EINER STRANGANORDNUNG**
DOWEL WITH A STRAND ARRANGEMENT
CHEVILLE COMPRENANTE UN AGENCEMENT DE BRINS

(30) Priorität: 12.12.2019 DE 102019219420
(43) Veröffentlichungstag der Anmeldung: 16.06.2021
(73) Patentinhaber: MHT Patentverwertungs-, Beteiligungs- und Verwaltungs GmbH, 82152 Planegg (DE)
(72) Erfinder: HÄRTL, Michael, 82152 Martinsried (DE)
(74) Vertreter: Weickmann & Weickmann PartmbB

(56) Entgegenhaltungen:
- EP-B1- 2 041 441
- DE-A1- 2 525 275
- DE-A1- 3 812 913

## Beschreibung

Die vorliegende Erfindung betrifft Verbesserungen auf dem Gebiet der Dübel mit einer Stranganordnung, welche allesamt zur Aufgabe haben, die mechanischen Eigenschaften solcher Dübel zu verbessern und/oder ihre Herstellung zu vereinfachen.

Gemäß einem ersten Aspekt betrifft die vorliegende Erfindung demzufolge einen Dübel mit einer Stranganordnung, die sich zwischen einem hinteren Ende und einem vorderen Ende des Dübels längs einer zentralen Dübellängsachse erstreckt und eine erste Gruppe von um die Dübellängsachse verteilt angeordneten Strängen sowie eine zweite Gruppe von um die Dübellängsachse verteilt angeordneten Strängen aufweist, wobei Stränge der ersten Stranggruppe und Stränge der zweiten Stranggruppe zumindest in einem das hintere Dübelende enthaltenden und sich über einen größten Teil der Dübellänge nach vorn erstreckenden Dübelkörperhauptabschnitt mit radialen Abständen von der zentralen Dübellängsachse so verlaufen, dass sie unter Kreuzungswinkeln einander kreuzen und Stränge der ersten Stranggruppe und Stränge der zweiten Stranggruppe an Kreuzungsstellen miteinander verbunden sind, wobei ferner die hinteren Enden von Strängen der Stranggruppen in Umfangsrichtung des Dübels an dessen hinterem Ende ringsherum verteilt sind und wobei die Stranganordnung so ausgebildet ist und/oder aus einem solchen Material besteht, dass sie in einem Winkel zur Dübellängsachse spreizbar ist.

Strangdübel der vorstehend genannten Art sind beispielsweise aus der EP 2 041 441 B1 bekannt. Sie haben sich insbesondere dadurch bewährt, dass sie für den Einsatz von Schrauben mit verschieden großen Schraubendurchmessern verwendbar sind, auf einfache Weise preiswert herstellbar sind und in einem Bohrloch ausgezeichnete Befestigungseigenschaften für eine darin einzuschraubende Schraube oder dgl. bieten.

Zu weiterem Stand der Technik sei auf die DE 38 12 913 A1, die EP 2 041 441 B1 und die DE 25 25 275 A1 verwiesen.

Aufgabe der vorliegenden Erfindung ist es, die Handhabbarkeit solcher Strangdübel bei ihrer bestimmungsgemäßen Verwendung zu verbessern, sowie ihre mechanischen Eigenschaften zu verbessern und ihre Herstellung zu vereinfachen.

Zur Lösung dieser Aufgabe wird erfindungsgemäß vorgeschlagen, dass der Dübel radial nach außen abstehende Kragenabschnitte an dessen hinterem Ende aufweist, die jeweils mindestens zwei der in Umfangsrichtung des Dübels an dessen hinterem Ende ringsherum verteilten Strangenden miteinander verbinden.

Derartige Kragenabschnitte haben stabilisierende Wirkung auf den Dübel, insbesondere derart, dass der Dübel unter Vermeidung einer nachteiligen Deformation bequem in ein Bohrloch einsteckbar ist und dass das hintere Dübelloch beim Einstecken des Dübels in ein Bohrloch radial stabil offen bleibt, so dass das Einbringen einer Schraube in das Dübelloch mühelos gelingen kann. Auch können die Kragenabschnitte als Anschläge beim Eindrücken des Dübels in ein Bohrloch wirken, so dass der Dübel nicht vollständig im Bohrloch verschwindet. Zuletzt vereinfachen die Kragenabschnitte auch noch die Herstellung des erfindungsgemäßen Dübels, da durch die erhöhte Stabilität eine verbesserte Handhabung des Dübels bereits bei seiner Herstellung und insbesondere bei einer Entformung davon erzielt wird.

Gemäß einer bevorzugten Ausführungsform der Erfindung ist es vorgesehen, dass die Kragenabschnitte jeweils in Umfangsrichtung des Dübels direkt benachbarte oder übernächst benachbarte Strangenden miteinander verbinden.

Gemäß einer weiteren bevorzugten Ausführungsform der Erfindung ist es vorgesehen, dass zumindest längs des Dübelkörperhauptabschnittes die Stränge der ersten Stranggruppe in Radialrichtung außen an den Strängen der zweiten Stranggruppe angeordnet sind und dass die Kragenabschnitte jeweils Strangenden der ersten Stranggruppe miteinander verbinden. Eine solche Lösung hat herstellungstechnische Vorteile und verleiht dem Dübel überdies ausgezeichnete Befestigungseigenschaften für eine darin einzuschraubende Schraube in einem betreffenden Bohrloch.

Vorzugsweise sind einige hintere Enden der ersten Stranggruppe und einige hintere Enden der zweiten Stranggruppe an betreffenden Verbindungsstellen am hinteren Dübelende miteinander verbunden, wobei die Kragenabschnitte auch von solchen Verbindungsstellen ausgehend Strangenden miteinander verbinden. Bei diesen Verbindungsstellen handelt es sich beispielsweise um solche Stellen, an denen die betreffenden schräg zueinander verlaufenden Stränge einander treffen. Eine solche Konstruktion schafft eine noch größere Formstabilität des Dübels bei dessen Handhabung.

Vorzugsweise sind die Kragenabschnitte von bogenförmigen oder beispielsweise pfeilspitzenförmig abgewinkelten Strängen gebildet. Eine solche Lösung ermöglicht eine stabile Gestaltung der Kragenabschnitte bei geringem Materialeinsatz.

Vorzugsweise sind die Stränge von zumindest einer der beiden Stranggruppen zum vorderen Dübelende hin zu einer Dübelspitze vereinigt.

Gemäß einem zweiten Aspekt, welcher ebenfalls die oben angesprochenen Aufgaben löst, betrifft die vorliegende Erfindung einen Dübel mit einer Stranganordnung, die sich längs einer zentralen Dübellängsachse erstreckt und eine erste Gruppe von um die Längsachse des Dübels verteilt angeordneten Strängen sowie eine zweite Gruppe von um die Dübellängsachse verteilt angeordneten Strängen aufweist, wobei Stränge der ersten Stranggruppe und Stränge der zweiten Stranggruppe in einem vom hinteren Dübelende ausgehenden und sich über einen Teil der Dübellänge nach vorn erstreckenden Dübelkörperhauptabschnitt mit radialen Abständen von der zentralen Dübellängsachse so verlaufen, dass sie unter Kreuzungswinkeln einander kreuzen und dass Stränge der ersten Stranggruppe und Stränge der zweiten Stranggruppe an Kreuzungsstellen miteinander verbunden sind, wobei ferner die hinteren Enden von Strängen der Stranggruppen in Umfangsrichtung des Dübels an dessen hinterem Ende ringsherum verteilt sind und wobei die Stranganordnung so ausgebildet ist und/oder aus einem solchen Material besteht, dass sie in einem Winkel zur Dübellängsachse spreizbar ist. Erfindungsgemäß umfasst dieser Dübel gemäß dem zweiten Aspekt der Erfindung einen vorderen Dübelbereich, in welchem Stränge in Richtung der Dübellängsachse und aufeinander zu verlaufen, um eine Dübelspitze zu bilden.

Somit unterscheidet sich der vordere Dübelbereich von dem Dübelkörperhauptabschnitt dahingehend, dass hier kein Gewebe aus sich kreuzenden Stranggruppen vorliegt, sondern einzelne Stränge in Richtung der Dübellängsachse nach vorne und schräg aufeinander zu verlaufen. Hierbei ist dann an einer definierten Längsposition des Dübels ein Übergang zwischen diesen Bereichen vorzusehen, in welchem sich die Orientierung der entsprechenden Stränge ändert.

Es hat sich gezeigt, dass durch diese Weiterbildung bekannter Dübel ein optimaler Kompromiss zwischen Festigkeit und Verformbarkeit erzielt werden kann, was sowohl beim Einsetzen eines solchen Dübels als auch bereits bei seiner Herstellung zu einer wesentlich verbesserten Handhabung führt.

Hierbei ist zu beachten, dass die Erfindungsmerkmale gemäß erstem Aspekt und gemäß zweitem Aspekt ohne weiteres in einem einzelnen Dübel kombiniert sein können, das heißt, dass ein erfindungsgemäßer Dübel sowohl Kragenabschnitte als auch eine Dübelspitze mit sich nicht kreuzenden Strängen umfassen kann.

Wenngleich die Maße und die Geometrie des erfindungsgemäßen Dübels auf den jeweiligen Anwendungsfall anpassbar sind, so hat sich gezeigt, dass besonders gute mechanische Eigenschaften erreicht werden können, wenn das Längenverhältnis zwischen dem Dübelkörperhauptabschnitt und dem vorderen Dübelbereich bezogen auf die Dübellängsachse zwischen 4:1 und 1:1 beträgt.

Ferner kann es für die Festigkeit eines solchen Dübels vorteilhaft sein, wenn der bereits angesprochene Übergang zwischen dem Dübelkörperhauptabschnitt und dem vorderen Dübelbereich im Bereich von Kreuzungsstellen zwischen Strängen der ersten Stranggruppe und Strängen der zweiten Stranggruppe liegt.

Zwar ist selbstverständlich denkbar, dass auch der Dübelkörperhauptabschnitt bereits eine zulaufende oder anderweitig unregelmäßige Form aufweist, in einer besonders einfachen Form der vorliegenden Erfindung kann er jedoch im Wesentlichen zylindrisch ausgebildet sein, so dass der radiale Abstand der Stränge von der Dübellängsachse in dem Dübelkörperhauptabschnitt im Wesentlichen konstant ist und zwischen dem Dübelkörperhauptabschnitt und dem vorderen Dübelbereich ein abknickender Übergang gebildet ist.

Wenngleich wie bereits angesprochen hinsichtlich der Form und den Abmessungen des erfindungsgemäßen Dübels zunächst einmal im Wesentlichen keine Einschränkungen darüber hinaus vorliegen, dass er seinen Einsatzzweck erfüllen können muss und eine hierzu ausreichende mechanische Stabilität aufzuweisen hat, so zeigt es sich, dass das Verhältnis zwischen dem radialen Abstand der Stränge von der Dübellängsachse und der Länge des Dübelkörperhauptabschnitts vorzugsweise zwischen 1:4 und 1:8 betragen kann und/oder dass die Dübelspitze einen Winkel von zwischen 30° und 60° bilden kann.

Für Dübel gemäß beider Aspekte der Erfindung gilt, dass in einer bevorzugten Ausführungsform davon die Stranggruppen jeweils gleich viele Stränge aufweisen können, insbesondere eine gerade Anzahl von Strängen, beispielsweise sechs Stränge. Alternativ sind jedoch beispielsweise auch Varianten der erfindungsgemäßen Dübel denkbar, in welchen eine der Stranggruppen, insbesondere die außerhalb der anderen vorgesehene Stranggruppe, doppelt so viele Stränge aufweist wie diese.

Die Stränge der ersten Stranggruppe und/oder die Stränge der zweiten Stranggruppe sind gemäß einer Ausführungsform der Erfindung zumindest längs des Dübelkörperhauptabschnittes um die Dübellängsachse gewunden. Dabei können die Stränge einer jeweiligen Stranggruppe in vorteilhafter Weise zumindest annähernd parallel zueinander verlaufen. Dabei hat es sich hinsichtlich der Befestigungseigenschaften des Dübels als vorteilhaft herausgestellt, dass die Stränge der ersten Stranggruppe in einem ersten Windungssinn, beispielsweise im Uhrzeigersinn, um die Dübellängsachse gewunden sind, wohingegen die Stränge der zweiten Stranggruppe in einem dem ersten Windungssinn entgegengesetzten Windungssinn, also beispielsweise entgegengesetzt dem Uhrzeigersinn, um die Dübellängsachse gewunden sind. Gemäß einer Variante dieser Ausführungsform der Erfindung sind die Stränge der ersten Stranggruppe und die Stränge der zweiten Stranggruppe zumindest über die Länge des Dübelkörperhauptabschnittes jeweils um mindestens 90° um die Dübellängsachse gewunden.

Gemäß einem dritten Aspekt betrifft die vorliegende Erfindung einen Dübel mit einer Stranganordnung, die sich längs einer zentralen Dübellängsachse erstreckt und eine erste Gruppe von um die Längsachse des Dübels verteilt angeordneten Strängen sowie eine zweite Gruppe von um die Dübellängsachse verteilt angeordneten Strängen aufweist, wobei Stränge der ersten Stranggruppe und Stränge der zweiten Stranggruppe zumindest in einem vom hinteren Dübelende ausgehenden und sich über einen größten Teil der Dübellänge nach vorn erstreckenden Dübelkörperhauptabschnitt mit radialen Abständen von der zentralen Dübellängsachse so verlaufen, dass sie unter Kreuzungswinkeln einander kreuzen und dass Stränge der ersten Stranggruppe und Stränge der zweiten Stranggruppe an Kreuzungsstellen miteinander verbunden sind, wobei ferner die hinteren Enden von Strängen der Stranggruppen in Umfangsrichtung des Dübels an dessen hinterem Ende ringsherum verteilt sind und wobei die Stranganordnung so ausgebildet ist und/oder aus einem solchen Material besteht, dass sie in einem Winkel zur Dübellängsachse spreizbar ist. Hier ist der Dübel gemäß dem dritten Aspekt spritzgegossen, wobei Stränge von wenigstens einer der Gruppe von Strängen mit einem Querschnitt ausgebildet sind, welcher vor einem Entformen des spritzgegossenen Dübels wenigstens abschnittsweise in Richtung auf die Dübellängsachse zu spitz zulaufend oder im Wesentlichen parabelförmig ausgebildet ist.

Es hat sich beim Spritzgießen gattungsgemäßer Dübel gezeigt, dass beim Entformen der Dübel insbesondere im Bereich eines Innenkerns die Querschnitte der Stränge eine wichtige Rolle spielen, um die Entformung zu erleichtern und eine Beschädigung des Dübels zu verhindern. Zudem ist es wünschenswert, die Querschnittsform der Stränge derart zu wählen, dass die gewünschten mechanischen Eigenschaften des Dübels mit einem möglichst geringen Materialbedarf erzielt werden können.

Auch hier sei festgehalten, dass die Merkmale des Dübels gemäß dem dritten Aspekt der Erfindung mit den Merkmalen des ersten und/oder zweiten Aspekts in einem einzelnen Dübel kombinierbar sind.

Der erfindungsgemäße Dübel nach einem oder mehreren der oben beschriebenen Aspekte besteht vorzugsweise aus einem Kunststoff, insbesondere Polyethylenkunststoff, vorzugsweise PE-LD (polyethylene low density).

Vorzugsweise können Dübel des ersten und zweiten Aspekts auch ungeachtet dem dritten Aspekt in einem Spritzgussverfahren hergestellt sein.

Ein Ausführungsbeispiel eines Dübels nach der Erfindung wird nachstehend unter Bezugnahme auf die Zeichnungen näher erläutert.
- Figur 1: zeigt den Dübel in einer perspektivischen Ansicht von schräg oben.
- Figur 2: zeigt den Dübel in einer perspektivischen Ansicht von schräg unten.
- Figur 3: zeigt den Dübelkörperhauptabschnitt des Dübels ohne Kragenabschnitte in einer perspektivischen Ansicht von schräg oben.
- Figur 4: zeigt mögliche Querschnittsformen von Strängen aus dem Dübel aus den Figuren 1 bis 3 vor einem Entformen im Rahmen eines Spritzguss-Herstellungsverfahrens.

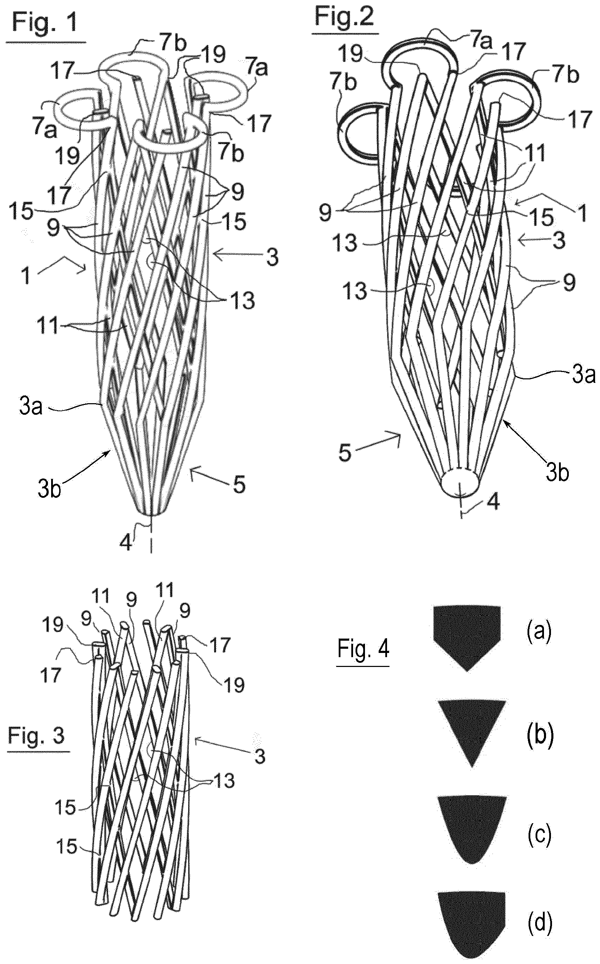

Gemäß den Figuren 1 bis 3 umfasst der erfindungsgemäße Dübel 1 einen Dübelkörperhauptabschnitt 3, dessen in Figur 3 radial am weitesten außen liegenden Bereiche zumindest näherungsweise auf einer (imaginären) zur Dübellängsachse 4 konzentrischen Zylinderfläche liegen. Der Dübelkörperhauptabschnitt 3 geht zum vorderen Ende des Dübels 1 hin über einen Übergangsbereich 3a in einen vorderen Dübelbereich 3b über, welcher eine Dübelspitze 5 bildet. Am hinteren Ende des Dübels 1 sind an dem Dübelkörperhauptabschnitt 3 radial nach außen abstehende Kragenabschnitte 7a, 7b vorgesehen. Im gezeigten Beispielsfall sind dies vier Kragenabschnitte 7a, 7b.

Der Dübel 1 besteht im Wesentlichen aus einer Stranganordnung, die sich von dem hinteren Ende in Richtung des vorderen Endes des Dübels 1 längs der zentralen Dübellängsachse 4 erstreckt und eine erste Gruppe von um die Dübellängsachse 4 verteilt angeordneten Strängen 9 sowie eine zweite Gruppe von um die Dübellängsachse 4 verteilt angeordneten Strängen 11 aufweist. Die Stränge sind von stabartigen Kunststoffabschnitten gebildet, wobei auf beispielhafte Querschnitte dieser Stränge noch im Zusammenhang mit Figur 4 weiter unten eingegangen werden wird.

Die Stränge 9 der ersten Stranggruppe und die Stränge 11 der zweiten Stranggruppe erstrecken sich im Bereich des Dübelkörperhauptabschnittes 3 mit radialen Abständen von der zentralen Dübellängsachse 4 in der Weise, dass sie unter Kreuzungswinkeln 13 einander kreuzen, wobei die Stränge 9 der ersten Stranggruppe radial außen von den Strängen 11 der zweiten Stranggruppe angeordnet sind. An den Kreuzungsstellen 15 sind die Stränge 9 der ersten Stranggruppe mit den Strängen 11 der zweiten Stranggruppe vorzugsweise stoffschlüssig miteinander verbunden.

Die Stränge 9 der ersten Stranggruppe sind über das vordere Ende des Dübelkörperhauptabschnitts 3 hinaus verlaufend zur Bildung der Dübelspitze 5 am vorderen Dübelende zusammengeführt und dort vorzugsweise miteinander verbunden, indem sie sich in diesem vorderen Dübelbereich 3b in Richtung der Dübellängsachse 3 und radial aufeinander zu erstrecken.

Die Stränge 11 der zweiten Stranggruppe enden im Beispielsfall am vorderen Ende des Dübelkörperhauptabschnittes 3.

Am hinteren Ende des Dübelkörperhauptabschnittes 3 sind die hinteren Enden der Stränge 9, 11 in Umfangsrichtung des Dübels 1 ringsherum verteilt, wie dies gut in Figur 3 erkennbar ist. Dort wechseln hintere Enden 17 von einzelnen Dübelsträngen 9 der ersten Stranggruppe mit Verbindungsstellen 19 dort zusammentreffender Dübelenden von Dübelsträngen 9 der ersten Stranggruppe und Dübelsträngen 11 der zweiten Stranggruppe in Umfangsrichtung einander ab.

Wie aus Figur 1 und Figur 2 zu ersehen ist, verbinden im Beispielsfall zwei einander gegenüberliegende Kragenabschnitte 7a jeweils hintere Enden 17 von Strängen 9 unter Umgehung jeweils einer in Umfangsrichtung dazwischenliegenden Verbindungsstelle 19. Zwei einander gegenüberliegende Kragenabschnitte 7b verbinden hingegen zwei in Umfangsrichtung des Dübels 1 aufeinanderfolgende Verbindungsstellen 19 unter Umgehung dazwischenliegender hinterer Enden 17 von Dübelsträngen 9.

Die Dübelstränge 9, 11 sind aus länglichen stabartigen Abschnitten gebildet, die vorzugsweise aus PE-LD (polyethylene low density) bestehen. Aus entsprechendem Material sind die gerundeten Kragenabschnitte 7a, 7b gebildet.

Der Dübel wird vorzugsweise in einem Spritzgussverfahren hergestellt, wobei vier mögliche Querschnitte von Strängen vor dem Entformen in Figur 4 dargestellt sind. Insbesondere weisen hierbei die Formen (a) und (b) eine spitz zulaufende Form auf, während die Formen (c) im Wesentlichen parabelförmig ausgebildet ist und die Form (d) einen leicht asymmetrisch parabelförmigen Abschnitt und einen abgeflachten Abschnitt aufweist. Diese Querschnittsformen zeigen alle beim Entformen der entsprechenden Dübel ein vorteilhaftes Verhalten, insbesondere, wenn sie für die Stränge 11 der zweiten Stranggruppe eingesetzt werden.

Der Dübel lässt sich einerseits wirtschaftlich herstellen und hat andererseits ausgezeichnete Gebrauchseigenschaften. Die Kragenabschnitte 7a, 7b haben gute stabilisierende Wirkung auf den Dübel 1, so dass er unter Vermeidung einer nachteiligen Deformation bequem in ein Dübelloch einsteckbar ist und dass das hintere Dübelloch beim Einstecken des Dübels 1 in ein Bohrloch radial stabil offen bleibt, so dass das Einbringen einer Schraube in das Dübelloch keine Mühe macht. Auch können die Kragenabschnitte 7a, 7b als Anschläge beim Eindrücken des Dübels 1 in ein Bohrloch wirken, so dass der Dübel nicht vollständig im Bohrloch verschwindet.

## Patentansprüche

1. Dübel (1) mit einer Stranganordnung, die sich längs einer zentralen Dübellängsachse (4) erstreckt und eine erste Gruppe von um die Längsachse (4) des Dübels verteilt angeordneten Strängen (9) sowie eine zweite Gruppe von um die Dübellängsachse verteilt angeordneten Strängen (11) aufweist, wobei Stränge (9) der ersten Stranggruppe und Stränge (11) der zweiten Stranggruppe zumindest in einem vom hinteren Dübelende ausgehenden und sich über einen größten Teil der Dübellänge nach vorn erstreckenden Dübelkörperhauptabschnitt (3) mit radialen Abständen von der zentralen Dübellängsachse (4) so verlaufen, dass sie unter Kreuzungswinkeln (13) einander kreuzen und dass Stränge (9) der ersten Stranggruppe und Stränge (11) der zweiten Stranggruppe an Kreuzungsstellen (15) miteinander verbunden sind, wobei ferner die hinteren Enden von Strängen der Stranggruppen in Umfangsrichtung des Dübels (1) an dessen hinterem Ende ringsherum verteilt sind und wobei die Stranganordnung so ausgebildet ist und/oder aus einem solchen Material besteht, dass sie in einem Winkel zur Dübellängsachse (4) spreizbar ist,
**dadurch gekennzeichnet,**
**dass** der Dübel (1) radial nach außen abstehende Kragenabschnitte (7a, 7b) an dessen hinterem Ende aufweist, die jeweils mindestens zwei der in Umfangsrichtung des Dübels (1) an dessen hinterem Ende ringsherum verteilten Strangenden miteinander verbinden.

2. Dübel (1) nach Anspruch 1, **dadurch gekennzeichnet, dass** die Kragenabschnitte (7a, 7b) jeweils in Umfangsrichtung des Dübels (1) direkt benachbarte oder übernächst benachbarte Strangenden einer der Stranggruppen miteinander verbinden.

3. Dübel (1) nach Anspruch 1 oder 2, **dadurch gekennzeichnet, dass** zumindest längs des Dübelkörperhauptabschnittes (3) die Stränge (9) der ersten Stranggruppe in Radialrichtung außen an den Strängen (11) der zweiten Stranggruppe angeordnet sind und dass Kragenabschnitte (7a) jeweils Strangenden (17) der ersten Stranggruppe miteinander verbinden.

4. Dübel (1) nach wenigstens einem der vorhergehenden Ansprüche, **dadurch gekennzeichnet, dass** einige hintere Enden der ersten Stranggruppe und einige hintere Enden der zweiten Stranggruppe an betreffenden Verbindungsstellen (19) mit einander verbunden sind und dass Kragenabschnitte (7b) auch von solchen Verbindungsstellen (19) ausgehend Strangenden miteinander verbinden.

5. Dübel (1) nach wenigstens einem der vorhergehenden Ansprüche, **dadurch gekennzeichnet, dass** die Kragenabschnitte (7a, 7b) von bogenförmigen oder abgewinkelten Strängen (9, 11) gebildet sind.

6. Dübel (1) nach wenigstens einem der vorhergehenden Ansprüche, **dadurch gekennzeichnet, dass** die Stränge (9) von zumindest einer der beiden Stranggruppen zum vorderen Dübelende hin zu einer Dübelspitze (5) vereinigt sind.

7. Dübel (1) mit einer Stranganordnung, die sich längs einer zentralen Dübellängsachse (4) erstreckt und eine erste Gruppe von um die Längsachse (4) des Dübels verteilt angeordneten Strängen (9) sowie eine zweite Gruppe von um die Dübellängsachse verteilt angeordneten Strängen (11) aufweist, wobei Stränge (9) der ersten Stranggruppe und Stränge (11) der zweiten Stranggruppe in einem vom hinteren Dübelende ausgehenden und sich über einen Teil der Dübellänge nach vorn erstreckenden Dübelkörperhauptabschnitt (3) mit radialen Abständen von der zentralen Dübellängsachse (4) so verlaufen, dass sie unter Kreuzungswinkeln (13) einander kreuzen und dass Stränge (9) der ersten Stranggruppe und Stränge (11) der zweiten Stranggruppe an Kreuzungsstellen (15) miteinander verbunden sind, wobei ferner die hinteren Enden von Strängen der Stranggruppen in Umfangsrichtung des Dübels (1) an dessen hinterem Ende ringsherum verteilt sind und wobei die Stranganordnung so ausgebildet ist und/oder aus einem solchen Material besteht, dass sie in einem Winkel zur Dübellängsachse (4) spreizbar ist,
ggf. ferner umfassend die Merkmale das kennzeichnenden Teils von wenigstens einem der Ansprüche 1 bis 6,
**dadurch gekennzeichnet,**
**dass** er ferner einen vorderen Dübelbereich (3b) umfasst, in welchem Stränge (9) in Richtung der Dübellängsachse und aufeinander zu verlaufen, um eine Dübelspitze (5) zu bilden.

8. Dübel (1) nach Anspruch 7, **dadurch gekennzeichnet, dass** das Längenverhältnis zwischen dem Dübelkörperhauptabschnitt (3) und dem vorderen Dübelbereich (3b) bezogen auf die Dübellängsachse (4) zwischen 4:1 und 1:1 beträgt.

9. Dübel (1) nach einem der Ansprüche 7 und 8, **dadurch gekennzeichnet, dass** der Übergang (3a) zwischen dem Dübelkörperhauptabschnitt (3) und dem vorderen Dübelbereich (3b) im Bereich von Kreuzungsstellen (15) zwischen Strängen (9) der ersten Stranggruppe und Strängen (11) der zweiten Stranggruppe liegt.

10. Dübel (1) nach einem der Ansprüche 7 bis 9, **dadurch gekennzeichnet, dass** der radiale Abstand der Stränge (9) von der Dübellängsachse (4) in dem Dübelkörperhauptabschnitt (3) im Wesentlichen konstant ist, so dass zwischen dem Dübelkörperhauptabschnitt (3) und dem vorderen Dübelbereich (3b) ein abknickender Übergang (3a) gebildet ist.

11. Dübel (1) nach wenigstens einem der Ansprüche 7 bis 10, **dadurch gekennzeichnet, dass** das Verhältnis zwischen dem radialen Abstand der Stränge (9) von der Dübellängsachse (4) und der Länge des Dübelkörperhauptabschnitts (3) vorzugsweise zwischen 1:4 und 1:8 beträgt und/oder dass die Dübelspitze (5) einen Winkel von zwischen 30° und 60° bildet.

12. Dübel (1) nach wenigstens einem der vorhergehenden Ansprüche, **dadurch gekennzeichnet, dass** die Stranggruppen jeweils gleich viele Stränge (9, 11), insbesondere eine jeweilige geradzahlige Anzahl von Strängen aufweisen.

13. Dübel (1) nach wenigstens einem der vorhergehenden Ansprüche, **dadurch gekennzeichnet, dass** die Stränge (9) des ersten Stranggruppe und/oder die Stränge (11) der zweiten Stranggruppe zumindest längs des Dübelkörperhauptabschnittes (3) um die Dübellängsachse (4) gewunden sind, wobei vorzugsweise die Stränge (9) der ersten Stranggruppe in einem ersten Windungssinn um die Dübellängsachse (4) gewunden sind, wohingegen die Stränge (11) der zweiten Stranggruppe in einem dem ersten Windungssinn entgegengesetzten Windungssinn um die Dübellängsachse (4) gewunden sind, wobei weiter vorzugsweise die Stränge (9) der ersten Stranggruppe und die Stränge (11) der zweiten Stranggruppe zumindest über die Länge des Dübelkörperhauptabschnittes (3) jeweils um mindestens 90° um die Dübellängsachse (4) gewunden sind.

14. Dübel (1) mit einer Stranganordnung, die sich längs einer zentralen Dübellängsachse (4) erstreckt und eine erste Gruppe von um die Längsachse (4) des Dübels verteilt angeordneten Strängen (9) sowie eine zweite Gruppe von um die Dübellängsachse verteilt angeordneten Strängen (11) aufweist, wobei Stränge (9) der ersten Stranggruppe und Stränge (11) der zweiten Stranggruppe zumindest in einem vom hinteren Dübelende ausgehenden und sich über einen größten Teil der Dübellänge nach vorn erstreckenden Dübelkörperhauptabschnitt (3) mit radialen Abständen von der zentralen Dübellängsachse (4) so verlaufen, dass sie unter Kreuzungswinkeln (13) einander kreuzen und dass Stränge (9) der ersten Stranggruppe und Stränge (11) der zweiten Stranggruppe an Kreuzungsstellen (15) miteinander verbunden sind, wobei ferner die hinteren Enden von Strängen der Stranggruppen in Umfangsrichtung des Dübels (1) an dessen hinterem Ende ringsherum verteilt sind und wobei die Stranganordnung so ausgebildet ist und/oder aus einem solchen Material besteht, dass sie in einem Winkel zur Dübellängsachse (4) spreizbar ist,
ggf. ferner umfassend die Merkmale des kennzeichnenden Teils von wenigstens einem der Ansprüche 1 bis 13,
**dadurch gekennzeichnet, dass** er spritzgegossen ist, wobei Stränge (9) von wenigstens einer der Gruppe von Strängen mit einem Querschnitt ausgebildet sind, welcher vor einem Entformen des spritzgegossenen Dübels (1) wenigstens abschnittsweise in Richtung auf die Dübellängsachse (4) zu spitz zulaufend oder im Wesentlichen parabelförmig ausgebildet ist.

15. Dübel (1) nach wenigstens einem der vorhergehenden Ansprüche, **dadurch gekennzeichnet, dass** er aus einem Kunststoff, insbesondere aus PE-LD besteht.

## Claims

1. Dowel (1) with a strand arrangement which extends along a central dowel longitudinal axis (4) and comprises a first group of strands (9) distributed around the longitudinal axis (4) of the dowel and a second group of strands (11) distributed around the dowel longitudinal axis, wherein strands (9) of the first strand group and strands (9) of the second strand group extend at least in a main dowel body section (3) starting from a rear dowel end and extending over a major part of the dowel length forwardly, with radial distances from the central dowel longitudinal axis (4), so that they cross each other at crossing angles (13), and that strands (9) of the first strand group and strands (11) of the second strand group are connected to one another at crossing points (15), wherein furthermore the rear ends of strands of the strand groups are distributed in the circumferential direction of the dowel (1) all around at its rear end, and wherein the strand arrangement is designed and/or consists of such a material that it can be expanded at an angle to the dowel's longitudinal axis (4),
**characterized in that** the dowel (1) has, at its rear end, radially outwardly projecting collar sections (7a, 7b), which each connect at least two of the strand ends distributed all around in the circumferential direction of the dowel (1) at its rear end.

2. Dowel (1) according to claim 1, **characterized in that** the collar sections (7a, 7b) each connect directly adjacent or next-adjacent strand ends of one of the strand groups to one another in the circumferential direction of the dowel (1).

3. Dowel (1) according to claim 1 or 2, **characterized in that** at least along the main dowel body section (3), the strands (9) of the first strand group are arranged in the radial direction on the outside of the strands (11) of the second strand group and that the collar sections (7a) respectively connect the strand ends (17) of the first strand group together.

4. Dowel (1) according to at least one of the preceding claims, **characterized in that** some rear ends of the first group of strands and some rear ends of the second group of strands are connected to one another at relevant connection points (19), and that collar sections (7b) also come from such connection points (19) connect strand ends together.

5. Dowel (1) according to at least one of the preceding claims, **characterized in that** the collar sections (7a, 7b) are formed by arcuate or angled strands (9, 11).

6. Dowel (1) according to at least one of the preceding claims, **characterized in that** the strands (9) of at least one of the two strand groups are combined towards the front end of the dowel to form a dowel tip (5).

7. Dowel (1) with a strand arrangement which extends along a central dowel longitudinal axis (4) and comprises a first group of strands (11) distributed around the longitudinal axis (4) of the dowel and a second group of strands (11) distributed around the dowel longitudinal axis, wherein strands (9) of the first strand group and strands (9) of the second strand group extend at least in a main dowel body section (3), starting from a rear dowel end and extending over a major part of the dowel length forwardly, with radial distances from the central dowel longitudinal axis (4), so that they cross each other at crossing angles (13), and that strands (9) of the first strand group and strands (11) of the second strand group are connected to one another at crossing points (15), wherein furthermore the rear ends of strands of the strand groups are distributed in the circumferential direction of the dowel (1) all around at the rear end, and wherein the strand arrangement is designed and/or consists of such a material that it can be spread at an angle to the longitudinal axis (4),
if necessary, further comprising the features of the characterizing part of at least one of claims 1 to 6,
**characterized in that** it further comprises a front dowel region (3b) in which strands (9) extend in the direction of the dowel longitudinal axis and towards each other to form a dowel tip (5).

8. Dowel (1) according to claim 7, **characterized in that** the length ratio between the main dowel body section (3) and the front dowel area (3b) relative to the dowel longitudinal axis (4) is between 4:1 and 1:1.

9. Dowel (1) according to one of claims 7 and 8, **characterized in that** the transition (3a) between the dowel body main section (3) and the front dowel area (3b) lies in the area of crossing points (15) between strands (9) of the first strand group and strands (11) of the second strand group.

10. Dowel (1) according to one of claims 7 to 9, **characterized in that** the radial distance of the strands (9) from the dowel longitudinal axis (4) in the dowel body main section (3) is essentially constant, so that between the dowel body main section (3) and the front dowel area (3b) a bending transition (3a) is formed.

11. Dowel (1) according to at least one of claims 7 to 10, **characterized in that** the ratio between the radial distance of the strands (9) from the dowel longitudinal axis (4) and the length of the main dowel body section (3) is preferably between 1:4 and 1: 8 and/or that the dowel tip (5) forms an angle of between 30° and 60°.

12. Dowel (1) according to at least one of the preceding claims, **characterized in that** the strand groups each have the same number of strands (9, 11), in particular a respective even number of strands.

13. Dowel (1) according to at least one of the preceding claims, **characterized in that** the strands (9) of the first strand group and/or the strands (11) of the second strand group are wound around the dowel longitudinal axis (4) at least along the main dowel body section (3), wherein preferably the strands (9) of the first strand group are wound around the dowel longitudinal axis (4) in a first winding direction, whereas the strands (11) of the second strand group are wound around the dowel longitudinal axis (4) in a winding direction opposite to the first winding direction, whereby further preferably the strands (9) of the first strand group and the strands (11) of the second strand group are each wound by at least 90 ° around the dowel longitudinal axis (4) at least over the length of the dowel body main section (3).

14. Dowel (1) with a strand arrangement which extends along a central dowel longitudinal axis (4) and comprises a first group of strands (9) distributed around the longitudinal axis (4) of the dowel and a second group of strands (11) distributed around the dowel longitudinal axis, wherein strands (9) of the first strand group and strands (9) of the second strand group extend at least in a main dowel body section (3), starting from a rear dowel end and extending over a major part of the dowel length forwardly, with radial distances from the central dowel longitudinal axis (4), so that they cross each other at crossing angles (13), and that strands (9) of the first strand group and strands (11) of the second strand group are connected to one another at crossing points (15), wherein furthermore the rear ends of strands of the strand groups are distributed in the circumferential direction of the dowel (1) all around at its rear end, and the strand arrangement is designed and/or consists of such a material that it can be expanded at an angle to the dowel's longitudinal axis (4),
if necessary further comprising the features of the characterizing part of at least one of claims 1 to 13,
**characterized in that** it is injection molded, wherein strands (9) of at least one of the group of strands are formed with a cross section which is formed before demoulding of the injection molded dowel (1), at least in sections in the direction of the dowel longitudinal axis (4) tapered or essentially parabolic.

15. Dowel (1) according to at least one of the preceding claims, **characterized in that** it consists of a plastic, in particular PE-LD.

## Revendications

1. Cheville (1) comprenant un agencement de brins qui s'étend le long d'un axe longitudinal central (4) de la cheville et qui présente un premier groupe de brins (9) répartis autour de l'axe longitudinal (4) de la cheville ainsi qu'un deuxième groupe de brins (11) répartis autour de l'axe longitudinal de la cheville,
dans laquelle
des brins (9) du premier groupe de brins et des brins (11) du deuxième groupe de brins s'étendent, au moins dans une section principale de corps de cheville (3) partant de l'extrémité arrière de la cheville et s'étendant vers l'avant sur la plus grande partie de la longueur de la cheville, à des distances radiales de l'axe longitudinal central (4) de la cheville, de telle sorte qu'ils se croisent selon des angles de croisement (13) et que des brins (9) du premier groupe de brins et des brins (11) du deuxième groupe de brins sont reliés entre eux à des points de croisement (15), et
en outre, les extrémités arrière des brins des groupes de brins sont réparties tout autour dans la direction circonférentielle de la cheville (1) à son extrémité arrière, et
l'agencement de brins est conçu de telle sorte et/ou est constitué d'un matériau tel qu'il peut être écarté selon un angle par rapport à l'axe longitudinal (4) de la cheville,
**caractérisée en ce que**
la cheville (1) présente, à son extrémité arrière, des sections de collerette (7a, 7b) faisant saillie radialement vers l'extérieur qui relient au moins deux des extrémités de brin respectives l'une à l'autre, réparties tout autour dans la direction circonférentielle de la cheville (1) à son extrémité arrière.

2. Cheville (1) selon la revendication 1,
**caractérisée en ce que** les sections de collerette (7a, 7b) relient entre elles les extrémités de brin respectives d'un des groupes de brins, lesquelles, dans la direction circonférentielle de la cheville (1), sont directement voisines ou suivent celles qui sont directement voisines.

3. Cheville (1) selon la revendication 1 ou 2,
**caractérisée en ce que**, au moins le long de la section principale de corps de cheville (3), les brins (9) du premier groupe de brins sont disposés sur les brins (11) du deuxième groupe de brins à l'extérieur dans la direction radiale, et **en ce que** les sections de collerette (7a) relient entre elles des extrémités de brins respectives (17) du premier groupe de brins.

4. Cheville (1) selon l'une au moins des revendications précédentes,
**caractérisée en ce que** certaines extrémités arrière du premier groupe de brins et certaines extrémités arrière du deuxième groupe de brins sont reliées entre elles à des points de jonction respectifs (19),
et **en ce que** des sections de collerette (7b) relient également des extrémités de brins entre elles à partir de tels points de jonction (19).

5. Cheville (1) selon l'une au moins des revendications précédentes,
**caractérisée en ce que** les sections de collerette (7a, 7b) sont formées par des brins (9, 11) arqués ou coudés.

6. Cheville (1) selon l'une au moins des revendications précédentes,
**caractérisée en ce que** les brins (9) de l'un au moins des deux groupes de brins sont réunis en une pointe de cheville (5) en direction de l'extrémité avant de la cheville.

7. Cheville (1) comprenant un agencement de brins qui s'étend le long d'un axe longitudinal central (4) de la cheville et qui présente un premier groupe de brins (9) répartis autour de l'axe longitudinal (4) de la cheville ainsi qu'un deuxième groupe de brins (11) répartis autour de l'axe longitudinal de la cheville,
dans laquelle
des brins (9) du premier groupe de brins et des brins (11) du deuxième groupe de brins s'étendent, dans une section principale de corps de cheville (3) partant de l'extrémité arrière de la cheville et s'étendant vers l'avant sur une partie de la longueur de la cheville, à des distances radiales de l'axe longitudinal central (4) de la cheville, de telle sorte qu'ils se croisent selon des angles de croisement (13) et que des brins (9) du premier groupe de brins et des brins (11) du deuxième groupe de brins sont reliés entre eux à des points de croisement (15), et
en outre, les extrémités arrière de brins des groupes de brins sont réparties tout autour dans la direction circonférentielle de la cheville (1) à son extrémité arrière, et
l'agencement de brins est conçu de telle sorte et/ou est constitué d'un matériau tel qu'il peut être écarté selon un angle par rapport à l'axe longitudinal (4) de la cheville,
comprenant en outre, le cas échéant, les caractéristiques de la partie caractérisante de l'une au moins des revendications 1 à 6,
**caractérisée en ce que**
elle comprend en outre une zone de cheville avant (3b) dans laquelle des brins (9) s'étendent dans la direction de l'axe longitudinal de la cheville et les uns vers les autres pour former une pointe de cheville (5).

8. Cheville (1) selon la revendication 7,
**caractérisée en ce que** le rapport de longueur entre la section principale de corps de cheville (3) et la zone de cheville avant (3b) par rapport à l'axe longitudinal (4) de la cheville est compris entre 4:1 et 1:1.

9. Cheville (1) selon l'une des revendications 7 et 8,
**caractérisée en ce que** la transition (3a) entre la section principale de corps de cheville (3) et la zone de cheville avant (3b) se situe dans la zone des points de croisement (15) entre des brins (9) du premier groupe de brins et des brins (11) du deuxième groupe de brins.

10. Cheville (1) selon l'une des revendications 7 à 9,
**caractérisée en ce que** dans la section principale de corps de cheville (3), la distance radiale des brins (9) par rapport à l'axe longitudinal (4) de la cheville est sensiblement constante, de sorte qu'une transition par pliage (3a) est formée entre la section principale de corps de cheville (3) et la zone de cheville avant (3b).

11. Cheville (1) selon l'une au moins des revendications 7 à 10,
**caractérisée en ce que** le rapport entre la distance radiale des brins (9) par rapport à l'axe longitudinal (4) de la cheville et la longueur de la section principale de corps de cheville (3) est de préférence compris entre 1:4 et 1:8, et/ou **en ce que** la pointe (5) de la cheville forme un angle compris entre 30° et 60°.

12. Cheville (1) selon l'une au moins des revendications précédentes,
**caractérisée en ce que** les groupes de brins présentent chacun le même nombre de brins (9, 11), en particulier chacun un nombre pair de brins.

13. Cheville (1) selon l'une au moins des revendications précédentes,
**caractérisée en ce que** les brins (9) du premier groupe de brins et/ou les brins (11) du deuxième groupe de brins sont enroulés autour de l'axe longitudinal (4) de la cheville au moins le long de la section principale de corps de cheville (3),
de préférence, les brins (9) du premier groupe de brins sont enroulés autour de l'axe longitudinal (4) de la cheville dans un premier sens d'enroulement, tandis que les brins (11) du deuxième groupe de brins sont enroulés autour de l'axe longitudinal (4) de la cheville dans un sens d'enroulement opposé au premier sens d'enroulement, et
de préférence encore, les brins (9) du premier groupe de brins et les brins (11) du deuxième groupe de brins sont enroulés chacun sur au moins 90° autour de l'axe longitudinal (4) de la cheville, au moins sur la longueur de la section principale de corps de cheville (3).

14. Cheville (1) comprenant un agencement de brins qui s'étend le long d'un axe longitudinal central (4) de la cheville et qui présente un premier groupe de brins (9) répartis autour de l'axe longitudinal (4) de la cheville ainsi qu'un deuxième groupe de brins (11) répartis autour de l'axe longitudinal de la cheville,
dans laquelle
des brins (9) du premier groupe de brins et des brins (11) du deuxième groupe de brins s'étendent, au moins dans une section principale de corps de cheville (3) partant de l'extrémité arrière de la cheville et s'étendant vers l'avant sur la plus grande partie de la longueur de la cheville, à des distances radiales de l'axe longitudinal central (4) de la cheville, de telle sorte qu'ils se croisent selon des angles de croisement (13) et que des brins (9) du premier groupe de brins et des brins (11) du deuxième groupe de brins sont reliés entre eux à des points de croisement (15), et
en outre, les extrémités arrière de brins des groupes de brins sont réparties tout autour dans la direction circonférentielle de la cheville (1) à son extrémité arrière, et
l'agencement de brins est conçu de telle sorte et/ou est constitué d'un matériau tel qu'il peut être écarté selon un angle par rapport à l'axe longitudinal (4) de la cheville,
comprenant en outre, le cas échéant, les caractéristiques de la partie caractérisante de l'une au moins des revendications 1 à 13,
**caractérisée en ce qu'**elle est moulée par injection, des brins (9) d'au moins l'un du groupe de brins étant formés avec une section transversale qui, avant un démoulage de la cheville (1) moulée par injection, est au moins localement effilée ou sensiblement parabolique en direction de l'axe longitudinal (4) de la cheville.

15. Cheville (1) selon l'une au moins des revendications précédentes, **caractérisée en ce qu'**elle est constituée d'une matière plastique, en particulier de PE-LD.
